Europäisches Patentamt

European Patent Office

Office européen des brevets

(19)

(11) Veröffentlichungsnummer: **0 183 104**
**B1**

(12) **EUROPÄISCHE PATENTSCHRIFT**

(45) Veröffentlichungstag der Patentschrift:
19.04.89

(51) Int. Cl.⁴: **H 01 M 10/39**

(21) Anmeldenummer: **85114199.4**

(22) Anmeldetag: **07.11.85**

(54) **Elektrochemische Speicherzelle.**

(30) Priorität: **24.11.84 DE 3442936**

(43) Veröffentlichungstag der Anmeldung:
**04.06.86 Patentblatt 86/23**

(45) Bekanntmachung des Hinweises auf die Patenterteilung:
**19.04.89 Patentblatt 89/16**

(84) Benannte Vertragsstaaten:
**BE FR GB IT NL**

(56) Entgegenhaltungen:
**EP-A-0 001 351**
**EP-A-0 014 282**
**FR-A-2 321 777**
**GB-A-1 472 975**
**GB-A-2 097 992**
**US-A-4 027 075**
**US-A-4 123 596**

**PATENTS ABSTRACTS OF JAPAN, Band 9, Nr. 147
(E-323) 1870 , 21. Juni 1985; & JP - A - 60 28 175 (YUASA
DENCHI K.k.) 13-02-1985**

(73) Patentinhaber: **Asea Brown Boveri
Aktiengesellschaft, Kallstadter Strasse 1, D-6800
Mannheim- Käfertal (DE)**

(72) Erfinder: **Dörrscheidt, Wolfgang, Dr. Dipl.- Chem.,
Heidestrasse 22, D-6928 Helmstedt (DE)**
Erfinder: **Langpape, Reinhart, Dr. Dipl.- Phys., In
der Hohl 21, D-6901 Schönau (DE)**
Erfinder: **Rozé, Jean- Philippe, Ahornweg 1, D-6908
Wiesloch (DE)**
Erfinder: **Steinleitner, Günther, Dr. Dipl.- Chem.,
Hans- Pfitzner- Strasse 1, D-6905 Schriesheim (DE)**

(74) Vertreter: **Rupprecht, Klaus, Dipl.- Ing., c/o Asea
Brown Boveri Aktiengesellschaft Zentralbereich
Patente Postfach 100351, D-6800 Mannheim 1 (DE)**

## Beschreibung

Die Erfindung bezieht sich auf eine elektrochemische Speicherzelle gemäß dem Oberbegriff des Patentanspruches 1.

Solche elektrochemischen Speicherzellen eignen sich sehr gut als Energiequellen. Sie finden in vermehrtem Maße ihre Anwendung beim Aufbau von Speicherbatterien, die zur Stromversorgung von Elektrofahrzeugen vorgesehen sind.

Ein spezielles Beispiel für diese Speicherzellen sind solche auf der Basis von Natrium und Schwefel, die wiederaufladbar sind und einen Festelektrolyten aus Betaaluminiumoxid besitzen, der den Anodenraum vom Kathodenraum trennt. Ein Vorteil dieser Speicherzellen besteht darin, daß beim Laden keine elektrochemischen Nebenreaktionen ablaufen. Der Grund dafür ist, daß nur Natriumionen durch den Festelektrolyten gelangen können. Die Stromausbeute solcher Natrium/Schwefel-Speicherzellen liegt daher bei 100 %. Bei diesen elektrochemischen Speicherzellen ist das Verhältnis von Energieinhalt zum Gesamtgewicht der Speicherzelle im Vergleich zum Bleiackumulator sehr hoch, da die Reaktionsstoffe leicht sind und bei den elektrochemischen Reaktionen viel Energie frei wird.

Neben dem Anodenraum, der mit Natrium gefüllt ist, weist eine solche Speicherzelle einen Kathodenraum auf, der bei einer normalen Speicherzelle zwischen dem die Speicherzelle nach außenhin begrenzenden metallischen Gehäuse und dem Festelektrolyten angeordnet ist. Dieser Kathodenraum ist bei allen bekannten Speicherzellen mit einem Langfasrigen Graphitfilz ausgefüllt, der mit Schwefel getränkt ist. Bei der Herstellung der Speicherzellen werden vorzugsweise aus dem Graphitfilz zwei halbschalenförmige Elemente geformt, mit Schwefel getränkt und dann in den Kathodenraum eingesetzt. Die Fertigung der Speicherzellen erfolgt bei Raumtemperatur. Für den Betrieb müssen die Speicherzellen auf eine Temperatur von 350 °C aufgeheizt werden. Wird eine Speicherzelle einem solchen Temperatureinfluß ausgesetzt, so kommt es zu einer Ausdehnung des Graphitfilzes, insbesondere der beiden Halbschalen, die im Kathodenraum angeordnet sind. Sie dehnen sich soweit aus, daß ihre Stirnflächen bündig aneinanderstoßen und die Fasern der einen Hälfte in die andere Hälfte übergreifen, so daß kein Zwischenraum mehr im Grenzbereich der Halbschalen verbleibt. Beim Entladen von Speicherzellen wandern die im Anodenraum enthaltenen Natriumionen durch den Festelektrolyten hindurch in den Kathodenraum und bilden dort mit dem vorhandenen Schwefel das Natriumpolysulfid. Aufgrund dessen, daß die beiden aus Graphitfilz gebildeten Halbschalen sich nunmehr eng berühren, kann sich das Natriumpolysulfid gleichmäßig im gesamten Kathodenraum, insbesondere auch über die Grenzflächen der beiden Halbschalen hinweg verteilen. Wird eine solche Speicherzelle, die größere Mengen Natriumpolysulfid im Kathodenraum enthält, abgekühlt, so erstarrt dieses zu einem geschlossenen Ring, der den Festelektrolyten fest umgibt. Das Natriumpolysulfid weist einen höheren thermischen Ausdehnungskoeffizienten als der aus Betaaluminiumoxid gefertigte Festelektrolyt auf. Dies bedeutet, daß der aus Natriumpolysulfid gebildete Ring beim Erkalten auf den Festelektrolyten aufschrumpft. Dadurch haftet er sehr fest an der Außenfläche des Festelektrolyten und übt bei Temperaturänderungen Scherkräfte auf selbigen aus, was durch die unterschiedlichen thermischen Ausdehnungskoeffizienten der beiden Materialien bedingt wird. Diese Scherkräfte führen auf Dauer zu einer Rißbildung an dem Festelektrolyten und damit zu einer Zerstörung der gesamten Speicherzelle.

Aus der GB-A-2 097 992 ist eine inverse Speicherzelle bekannt, bei der im Kathodenraum neben dem Stromkollektor Ringe aus Graphitfilz angeordnet sind. Diese sind Ringe sind um den Stromkollektor herum angeordnet, aufeinandergestapelt und mit Schwefel getränkt.

In der FR-A-2 321 777 ist ebenfalls eine inverse elektrochemische Speicherzelle beschrieben. Der Kathodenraum ist im Inneren des als Rohr ausgebildeten Festelektrolyten angeordnet. Um den kathodischen Stromkollektor, der weit in den Festelektrolyten hineinragt, sind Ringe aus Graphitfilz und Scheiben aus Graphitfolie angeordnet, die zur Ausbildung von elektrischen Leitern innerhalb des Kathodenraums vorgesehen sind.

Aus der EP-A-0 001 351 ist eine inverse Speicherzelle bekannt, die im Festelektrolyten, der als Kathodenraum dient, ein Rohr aus Aluminium oder einer Aluminiumlegierung aufweist, welche als Stromkollektor dient. Ferner ist in diesem Kathodenraum eine Metallfolie vorgesehen, die so gefaltet ist, daß sie eine Mehrzahl von Vorsprüngen aufweist die sich in Längsrichtung des Rohres erstrecken, wobei die Folie zwischen den Vorsprüngen mit dem Rohr verbunden ist. Die Vorsprünge erstrecken sich bis in die Nähe des Festelektrolyten. Zwischen den Vorsprüngen sind trapezförmige Elemente angeordnet, welche die Kathodenelektrode bilden.

Der Erfindung liegt die Aufgabe zugrunde eine elektrochemische nicht inverse Speicherzelle zu schaffen, bei der die Einwirkungen von zerstörenden Kräften auf den Festelektrolyten dauerhaft unterbunden werden.

Diese Aufgabe wird erfindungsgemäß durch die kennzeichnenden Merkmale des Patentanspruches 1 gelöst.

Durch die erfindungsgemäße Unterteilung des Kathodenraums, insbesondere die Unterteilung der Schwefelelektrode in zwei oder mehrere Sektoren, die durch zusätzliche Scheiben voneinander getrennt sind, wird die Bildung eines zusammenhängenden Rings aus Natriumpolysulfid unterbunden. Dadurch kommt es nur zu einer Erstarrung des Natriumpolysulfid in Form von Teilstücken. Durch die Verwendung von zusätzlichen Distanzscheiben wird die Bildung einer zusammenhängenden Schicht aus Natriumpolysulfid, die den Festelektrolyten einengen könnte, vermieden. Bei der Verwendung von Distanzscheiben zur Abtrennung der Sektoren gegeneinander wird vorzugsweise ein Material verwendet, das nur schwer von Natriumpolysulfid benetzt werden kann. Hierfür ist besonders Alphaaluminiumoxid geeignet.

Weitere erfindungswesentliche Merkmale sind in den Unteransprüchen gekennzeichnet.

Die Erfindung wird nachfolgend anhand von Zeichnungen erläutert.

Es zeigen:

Figur 1: Einen Vertikalschnitt durch eine elektrochemische Speicherzelle,

Figur 2: einen Horizontalschnitt durch die in Figur 1 gezeigte Speicherzelle gemäß der Schnittlinie I - I,

Figur 3: eine Variante der erfindungsgemäßen Speicherzelle,

Figur 4: eine weitere Ausführungsform der Speicherzelle.

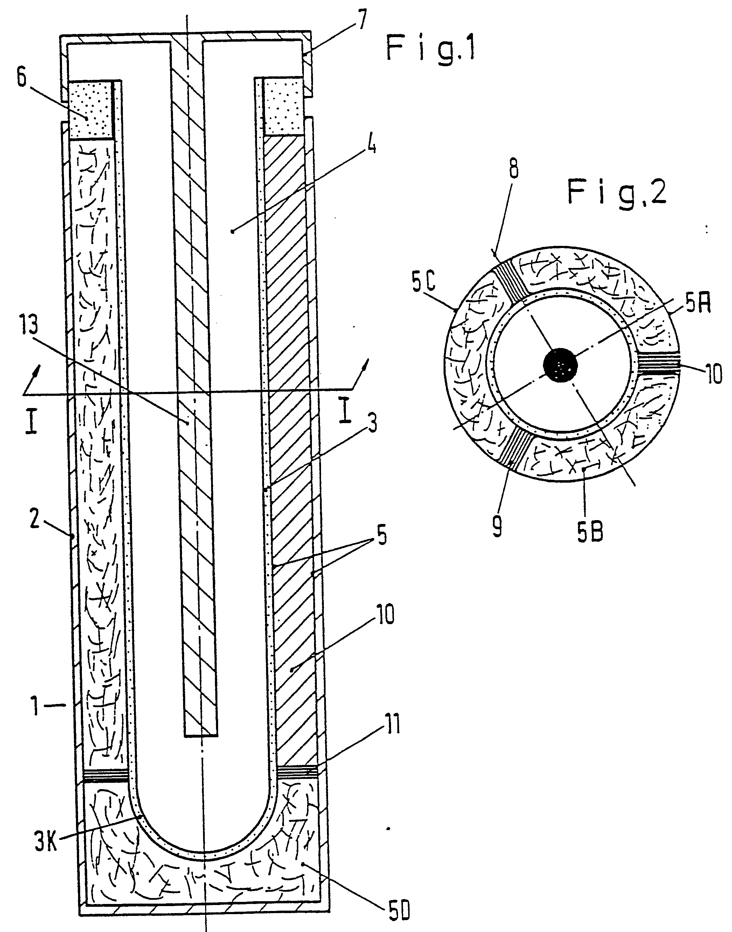

Die in Figur 1 dargestellte Speicherzelle 1 wird nach außenhin durch ein metallisches Gehäuse 2 begrenzt, das bei dem hier dargestellten Ausführungsbeispiel becherförmig ausgebildet ist. Die Innenflächen des metallischen Gehäuses 2 sind mit einem Korrosionsschutz (hier nicht dargestellt) versehen. Im Inneren des metallischen Gehäuses 2 ist der ebenfalls becherförmig ausgebildete Festelektrolyt 3 angeordnet. Sein Innenraum dient als Anodenraum 4 und ist mit Natrium gefüllt. Die Abmessungen des Festelektrolyten sind so gewählt, daß zwischen seinen Außenflächen und den Innenflächen des metallischen Gehäuses 2 ein zusammenhängender Zwischenraum verbleibt, der als Kathodenraum 5 dient. Am oberen Ende des Festelektrolyten 3 ist ein metallischer Druckring 6 angeglast, der teilweise mit der Innenfläche des Gehäuses 2 und der Verschlußkappe 7 der Speicherzelle 1 gasdicht verbunden ist, wodurch die Speicherzelle 1 nach außenhin fest verschlossen wird. Der zwischen dem Festeelektrolyten 3 und dem metallischen Gehäuse 2 angeordnete Kathodenraum 5, insbesondere die darin angeordnete Schwefelelektrode ist erfindungsgemäß in mehrere Sektoren aufgeteilt. Bei dem hier dargestellten Ausführungsbeispiel, von dem ein Horizontalschnitt in Figur 2 zu sehen ist, ist der zur Längsachse des Festelektrolyten verlaufende Bereich des Kathodenraums 5 in drei Sektoren 5A, 5B und 5C aufgeteilt. Diese sind mit Stücken aus Graphitfilz ausgefüllt, welche mit Schwefel getränkt sind. Wie anhand von Figur 2 zu sehen ist, sind die Sektoren durch Distanzscheiben 8, 9 und 10 sind voneinander getrennt Die Distanzscheiben 8, 9 und 10 sind radial angeordnet. Ihre Breite ist so bemessen, daß sie sowohl bündig an den Festelektrolyten als auch an die Innenfläche des metallischen Gehäuses 2 angrenzen. Die Längen der Distanzscheiben 8, 9 und 10 sind so gewählt daß die den Längen der Sektoren 5A, 5B und 5C entsprechen, die sich vom Kuppenbereich 3K des Festelektrolyten 3 bis geringfügig unterhalb des Druckringes 6 erstrecken.

Wie Figur 1 weiter zeigt, ist der Bereich des Kathodenraums 5, der um die Kuppe 3K des Festelektrolyten angeordnet ist, ebenfalls von dem übrigen Bereich getrennt, so daß hier ein weiterer Sektor 5D besteht, der durch eine ringförmige Distanzscheibe 11 von den Sektoren 5A, 5B und 5C getrennt ist. Die Distanzscheibe 11 ist so bemessen, daß sie mit ihrer Außenkante an das metallische Gehäuse 2 angrenzt und innen direkt an den Festelektrolyten 3 anschließt. Die zur Trennung der Sektoren 5A, 5B, 5C und 5D verwendeten Distanzscheiben 8, 9, 10 und 11 sind aus einem solchen Material gefertigt, das nur schwer von Natriumpolysulfid benetzt werden kann. Hierfür eignet sich besonders Alphaaluminiumoxid.

Als kathodischer Stromkollektor wird bei dem hier dargestellten Ausführungsbeispiel das metallische Gehäuse 2 verwendet. Der anodische Stromabnehmer wird durch einen Metall- oder Graphitstab 13 gebildet, der weit in den Festelektrolyten 3 hineinragt und mit der Innenseite der metallischen Verschlußkappe 7 elektrisch leitend verbunden ist, so daß die Außenfläche der Verschlußkappe 7 als elektrisches Anschlußelement verwendet werden kann.

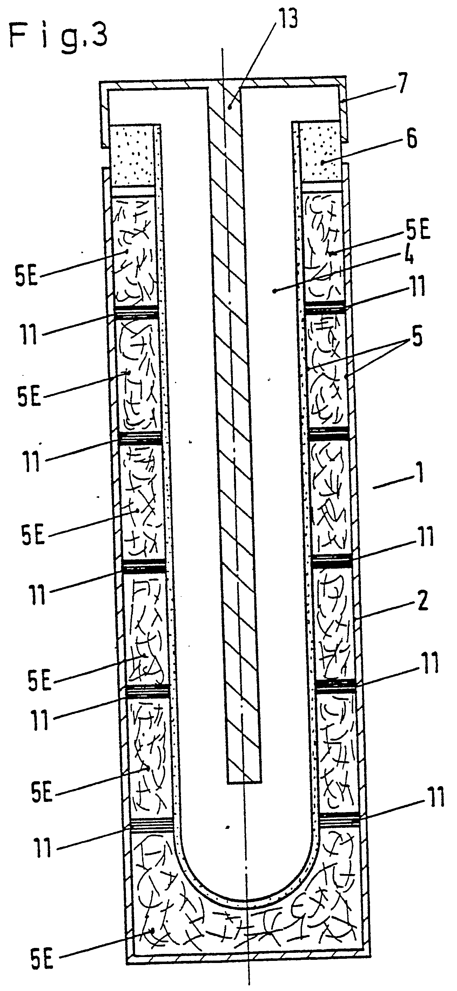

Figur 3 zeigt eine Variante der in den Figuren 1 und 2 dargestellten Ausführungsform. Die Speicherzelle 1 wird auch hierbei durch ein metallisches Gehäuse in Form eines Bechers nach außenhin begrenzt. In ihr ist wiederum ein Festelektrolyt 3 mit solchen Abmessungen angeordnet, daß zwischen dem metallischen Gehäuse 2 und dem Festelektrolyten 3 der Kathodenraum 5 gebildet wird, während der Anodenraum 4 sich im Inneren des Festelektrolyten 3 befindet. Wie Figur 3 zeigt, ist auch bei diesem Ausführungsbeispiel der Kathodenraum 5 in mehrere Sektoren, insbesondere in sechs Sektoren 5E aufgeteilt. Diese sind von ringförmigen Graphitstücken ausgefüllt, die senkrecht untereinander angeordnet sind, wobei jeweils zwei aufeinanderfolgende Graphitringe durch eine ringförmige Distanzscheibe 11 voneinander getrennt sind. Die ringförmigen Distanzsscheiben 11 sind senkrecht zur Längsachse des Festelektrolyten angeordnet und aus einem durch Natriumpolysulfid schwer benetzbaren Material gefertigt. Die Höhe eines jeden Graphitrings 5E entspricht etwa einem Sechstel der Gesamthöhe des metallischen Gehäuses 2. Die Graphitringe werden vor dem Einsetzen in den Kathodenraum 5 durch entsprechendes Pressen aus Graphitfasern gebildet und zusätzlich mit Schwefel getränkt. Es besteht die Möglichkeit, jeden Graphitring 5E in zwei Hälften herzustellen, und diese dann in den Kathodenraum 5 einzusetzen.

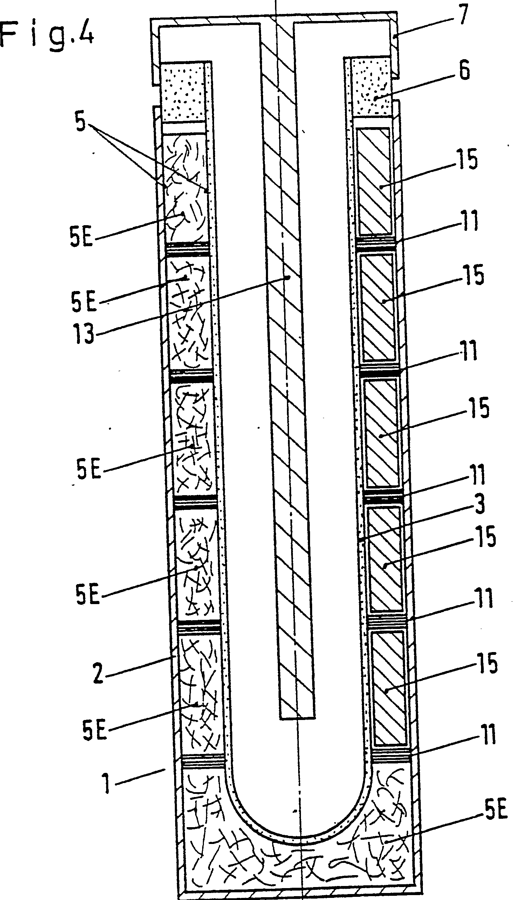

Die in Figur 4 dargestellte Ausführungsform der Speicherzelle ist bis auf den Kathodenraum 5 im wesentlichen so ausgebildet, wie die in Figur 3 dargestellte und in der dazugehörigen Beschreibung erläuterte Speicherzelle 1. Innerhalb des Kathodenraums 5 sind wieder mehrere senkrecht untereinander angeordnete Graphitringe 5E angeordnet, wobei jeweils zwei direkt aufeinanderfolgende Graphitringe durch eine ringförmige Distanzscheibe 11 voneinander getrennt sind. Diese Distanzscheiben sind ebenso ausgebildet und angeordnet wie die in Figur 3 dargestellten Distanzscheiben. Abweichend von dem in Figur 3 dargestellten Ausführungsbeispiel ist jeder Graphitring 5E aus zwei Hälften zusammengesetzt, wobei die Stirnseiten der beiden Hälften wiederum durch je eine Distanzscheibe 15 voneinander getrennt sind. Diese sind radial angeordnet und so bemessen, daß sie bündig an den Festelektrolyten 3 und an die Innenfläche des metallischen Gehäuses angrenzen. Ihre Höhe ist an die Höhe der jeweiligen Graphitringe 5E angepaßt.

**Patentansprüche**

1. Elektrochemische Speicherzelle auf der Basis von Natrium und Schwefel mit einem Anodenraum (4) und einem Kathodenraum (5), die durch einen Festelektrolyten (3) voneinander getrennt und wenigstens bereichsweise von einem metallischen Gehäuse (2) begrenzt sind wobei der zwischen dem Gehäuse (2) und dem Festelektrolyten (3) liegende Kathodenraum (5) die unterteilte Schwefelelektrode enthält, die aus mit Schwefel getränktem Graphit- oder Kohlenstoff-Fasermaterial gefertigt ist, dadurch gekennzeichnet, daß der Kathodenraum (5) im Bereich der seitlichen Begrenzungsfläche des Festelektrolyten (3) in zwei vorzugsweise mehrere Sektoren (5A, 5B und 5C) aufgeteilt ist, die parallel zur Längsachse des Festelektrolyten (3) verlaufen und sich längs der gesamten seitlichen Begrenzung des Festelektrolyten (3) erstrecken und durch Distanzscheiben (8, 9, 10) voneinander getrennt sind, welche radial angeordnet sind, derart, daß ihre Schmalseiten an den Festelektrolyten (3) und an die Innenflächen des metallischen Gehäuses (2) angrenzend angeordnet sind, und daß der um die Kuppe (3K) des Festelektrolyten (3) angeordnete Bereich des Kathodenraums (5) durch eine senkrecht zur Längsachse des Festelektrolyten (3) angeordnete Distanzscheibe (11) von dem übrigen Bereich des Kathodenraums (5) abgetrennt ist.

2. Elektrochemische Speicherzelle auf der Basis von Natrium und Schwefel mit einem Anodenraum (4) und einem Kathodenraum (5), die durch einen Festelektrolyten (3) voneinander getrennt und wenigstens bereichsweise von einem metallischen Gehäuse (2) begrenzt sind, wobei der zwischen dem Gehäuse (2) und dem Festelektrolyten (3) liegende Kathodenraum (5) die unterteilte Schwefelelektrode enthält, die aus mit Schwefel getränktem Graphit- oder Kohlenstoff-Fasermaterial gefertigt ist, dadurch gekennzeichnet, daß der Kathodenraum (5) in zwei vorzugsweise mehrere ringförmige Sektoren (5E) unterteilt ist, daß je zwei aufeinanderfolgende ringförmige Sektoren (5E) durch eine ringförmige Distanzscheibe (11) voneinander getrennt sind, die senkrecht zur Längsachse des Festelektrolyten (3) angeordnet ist, daß jeder ringförmige Sektor (5E) in mindestens zwei Hälften unterteilt ist, deren aneinandergrenzende Stirnflächen durch Distanzscheiben (15) begrenzt sind, die senkrecht zur Längsachse des Festelektrolyten (3) verlaufen und deren Schmalseiten an den Festelektrolyten (3) und an die Innenflächen des metallischen Gehäuses (2) angrenzend angeordnet sind.

3. Elektrochemische Speicherzelle nach einem der Ansprüche 1 oder 2, dadurch gekennzeichnet, daß jede Distanzscheibe (8, 9, 10, 11, 15) aus einem nur geringfügig vom Natriumpolysulfid benetzbaren Material gefertigt ist.

4. Elektrochemische Speicherzelle nach Anspruch 3, dadurch gekennzeichnet, daß die Distanzscheiben (8, 9, 10, 11, 15) aus Alphaaluminiumoxid gefertigt sind.

**Claims**

1. Electrochemical storage cell based on sodium and sulphur having an anode space (4) and a cathode space (5) which are separated from each other by a solid electrolyte (3) and are bounded, at least in some regions, by a metallic housing (2), the cathode space (5) situated between the housing (2) and the solid electrolyte (3) containing the subdivided sulphur electrode, which is manufactured from graphite or carbon fibre material impregnated with sulphur, characterized in that, in the region of the lateral boundary face of the solid electrolyte (3), the cathode space (5) is divided up into two, preferably several, sectors (5A, 5B and 5C) which run parallel to the longitudinal axis of the solid electrolyte (3) and extend along the entire lateral boundary of the solid electrolyte (3) and are separated from each other by spacing plates (8, 9, 10) which are radially disposed in a manner such that their narrow sides are disposed to adjoin the solid electrolyte (3) and the inside surfaces of the metallic housing (2), and in that the region of the cathode space (5) disposed around the dome (3K) of the solid electrolyte (3) is separated from the remaining region of the cathode space (5) by a spacing plate (11) disposed perpendicularly to the longitudinal axis of the solid electrolyte (3).

2. Electrochemical storage cell based on sodium and sulphur having an anode space (4) and a cathode space (5) which are separated from each other by a solid electrolyte (3) and are bounded, at least in some regions, by a metallic housing (2), the cathode space (5) situated between the housing (2) and the solid electrolyte (3) containing the subdivided sulphur electrode, which is manufactured from graphite or carbon fibre material impregnated with sulphur, characterized in that the cathode space (5) is subdivided into two, preferably several, annular sectors (5E), in that every two consecutive annular sectors (5E) are separated from each other by an annular spacing plate (11) which is disposed perpendicularly to the longitudinal axis of the solid electrolyte (3), in that every annular sector (5E) is subdivided into at least two halves whose adjacent end surfaces are bounded by spacing plates (15) which run perpendicularly to the longitudinal axis of the solid electrolyte (3) and whose narrow sides are disposed to adjoin the solid electrolyte (3) and the inside surfaces of the metallic housing (2).

3. Electrochemical storage cell according to one of the Claims 1 or 2, characterized in that each spacing plate (8, 9, 10, 11, 15) is manufactured from a material which can be wetted only slightly by sodium polysulphide.

4. Electrochemical storage cell according to Claim 3, characterized in that the spacing plates (8, 9, 10, 11, 15) are manufactured from α-aluminium oxide.

**Revendications**

1. Elément accumulateur électrochimique à base de sodium et de soufre comprenant un compartiment anodique (4) et un compartiment cathodique (5) qui sont séparés l'un de l'autre par un électrolyte solide (3) et sont limités au moins dans certaines zones par un boîtier métallique (2), l'espace cathodique (5) qui se trouve entre le boîtier (2) et l'électrolyte solide (3) contenant l'électrode au soufre divisée qui est fabriquée à partir d'un matériau formé de fibres de graphite ou de carbone et imprégné de soufre, caractérisé en ce que le compartiment cathodique (5) est divisé, dans la zone de la surface de limitation latérale de l'électrolyte solide (3), en deux, de préférence plusieurs secteurs (5A, 5B et 5C) qui s'étendent parallèlement à l'axe longitudinal de l'électrolyte solide (3), longent l'ensemble de la limitation latérale de l'électrolyte solide (3) et sont séparés les uns des autres par des plaques d'espacement (8, 9, 10) qui sont disposées radialement de telle sorte que leurs côtés étroits soient adjacents à l'électrolyte solide (3) et aux surfaces intérieures du boîtier métallique (2) et en ce que la zone du compartiment cathodique (5) disposée autour du bout arrondi (3K) de l'électrolyte solide (3) est séparée de la zone restante du compartiment cathodique (5) par une plaque d'espacement (11) disposée perpendiculairement à l'axe longitudinal de l'électrolyte solide (3).

2. Elément accumulateur électrochimique à base de sodium et de soufre comprenant un compartiment anodique (4) et un compartiment cathodique (5) qui sont séparés l'un de l'autre par un électrolyte solide (3) et sont limités au moins dans certaines zones par un boîtier métallique (2), le compartiment cathodique (5) qui se trouve entre le boîtier (2) et l'électrolyte solide (3) contenant l'électrode au soufre divisée qui est fabriquée à partir d'un matériau formé de fibres de graphite ou de carbone et imprégné de soufre, caractérisé en ce que le compartiment cathodique (5) est divisé en deux, de préférence plusieurs secteurs annulaires (5E), en ce que deux secteurs annulaires (5E) se faisant suite sont séparés l'un de l'autre par une plaque d'espacement annulaire (11) qui est disposée perpendiculairement à l'axe longitudinal de l'électrolyte solide (3), en ce que chaque secteur annulaire (5E) est divisé en au moins deux moitiés dont les surfaces frontales adjacentes sont limitées par des plaques d'espacement (15) qui s'étendent perpendiculairement à l'axe longitudinal de l'électrolyte solide (3) et dont les côtés étroits sont adjacents à l'électrolyte solide (3) et aux surfaces intérieures du boîtier métallique (2).

3. Elément accumulateur électrochimique selon l'une des revendications 1 ou 2, caractérisé en ce que chaque plaque d'espacement (8, 9, 10, 11, 15) est fabriquée dans un matériau qui n'est que faiblement mouillable par le polysulfure de sodium.

4. Elément accumulateur électrochimique selon la revendication 3, caractérisé en ce que les plaques d'espacement (8, 9, 10, 11, 15) sont fabriquées en oxyde d'aluminium alpha.

Fig.1

Fig.2

# Fig.3

Fig.4